# EUROPEAN PATENT SPECIFICATION

(11) **EP 2 867 435 B1**
(45) Date of publication and mention of the grant of the patent: **14.08.2019**
(21) Application number: 13809332.3
(22) Date of filing: 30.05.2013
(51) Int. Cl.: E21B 1/02

(54) **DEVICE AND METHOD IN RESPECT OF A ROCK DRILLING MACHINE AND ROCK DRILLING MACHINE**
VORRICHTUNG UND VERFAHREN IM ZUSAMMENHANG MIT EINER GESTEINSBOHRMASCHINE UND GESTEINSBOHRMASCHINE
DISPOSITIF ET PROCÉDÉ CONCERNANT UNE PERFORATRICE DE ROCHES ET PERFORATRICE DE ROCHES

(30) Priority: 28.06.2012 SE 1250726
(43) Date of publication of application: 06.05.2015
(73) Proprietor: Epiroc Rock Drills Aktiebolag, 701 91 Örebro (SE)
(72) Inventor: JONSSON, Per, S-702 14 Örebro (SE)
(74) Representative: Ehrner & Delmar Patentbyrå AB
(86) International application number: PCT/SE2013/050621
(87) International publication number: WO 2014/003626

(56) References cited:
- EP-A1- 0 070 044
- EP-A1- 0 196 195
- EP-B1- 0 335 994
- WO-A1-2008/060216
- WO-A1-2011/123028
- US-A- 4 109 734
- US-A- 4 289 209
- US-A- 4 582 145
- US-A- 6 112 832
- US-A1- 2010 170 390

## Description

### FIELD OF THE INVENTION

The invention relates to a device for a hydraulic rock drilling machine for the protection of a piston seal unit for sealing between a percussive piston and a cylinder in a housing of the rock drilling machine. The invention also concerns a rock drilling machine including such a device and a method.

### BACKGROUND OF THE INVENTION

In hydraulic rock drilling machines of the piston-cylinder type, during certain operational situations, wherein the percussive piston performs its movement to and fro, pressure pulsations occur being of such magnitude that cavitation occurs in the hydraulic fluid because of the high movement speed of the percussive piston in the working space of the cylinder.

In case cavitation bubbles in the hydraulic liquid reaches the piston seals, there is a risk that these are damaged when the bubbles collapse, which would results in leakage problems and shortened working life of the sealings.

In previously known hydraulic rock drilling machines, as a rule the region between the piston guide for the percussive piston and the pistons seals is connected to the draining system of the drilling machine. Hereby hydraulic liquid emerging between the piston guide and the piston is led away and a reduction of the hydraulic liquid pressure will be the result, which is intended to result in reduction of the loads on the sealings.

It has, however, been observed that this arrangement not entirely satisfactory reduces cavitation damages on the sealings.

From WO 2011/123028 A1 is previously known a rock drilling machine wherein it is provided an arrangement with an oil channel extending between a chamber in a percussive damping arrangement and a region adjacent to a seal. The oil channel includes a series of restrictions and oil volumes for preventing movements of cavitation bubbles through the oil channel. The document indicates that this arrangement can be used in respect of a percussive piston in a rock drilling machine.

In US 4582145 A an equalizing chamber arrangement in respect of a drill shank is described, said arrangement being adapted to avoid strong pressure impact generated damages on seals. This is achieved in that the equalizing chamber is alternatively connected to a source of pressure medium and to a pressure medium container.

### AIM AND MOST IMPORTANT FEATURES OF THE INVENTION

It is an aim of the present invention to provide a further development of previously known arrangements for protection of piston seals in hydraulic rock drilling machines and to at least reduce the problems that occurring cavitations cause on the piston seals.

This aim is achieved in a device as mentioned above in that between the piston guide and the piston seal unit there is arranged a surrounding ring-shaped inwardly open chamber, which is formed for receiving a hydraulic liquid volume, and that a hydraulic supply flow channel for hydraulic liquid supply is connected to said chamber.

By this way providing a fluid flow to the inwardly open chamber, said liquid flow preferably being in general continuous and/or constant, it is ensured in an effective way that pressure variations are cushioned and in a particular that the hydraulic liquid adjacent to the piston seal unit does not includes cavitation bubbles. Viz, through the liquid flow it is ensured that over time there is constantly an excess of hydraulic fluid wherein pressure variations can be levelled through the elasticity of the liquid and wherein it is avoided that cavitation bubbles are propagating because of insufficient access of unaffected hydraulic liquid in this region.

It is preferred that said hydraulic supply flow channel is arranged to start from a return flow channel from a hydraulic percussive damping arrangement in the rock drilling machine, since hereby is provided a hydraulic flow of suitable magnitude, a hydraulic flow that furthermore is already accessible in the rock drilling machine, and that also already has been used for its primary purpose. The use of this return flow therefore does not result in any reduced effect or further power take-out from the rock drilling machine. Alternatively, the source is an adjustable constant flow source, which does result in certain power consumption but gives greater possibilities of controlling the flow.

It is suitable and rational in respect of production that the piston seal unit is supported by a sealing holder wherein said chamber is received.

Suitably the piston seal unit provides two sealing devices which are arranged at an axial distance from each other.

Said chamber preferably adjoins to an auxiliary chamber over at least one connection channel, whereby an increase of the amount of accessible hydraulic liquid can be ensured. It is preferred that said hydraulic supply flow channel is arranged to connect to said chamber over the auxiliary chamber.

In the hydraulic rock drilling machine, between said chamber and the piston guide there is preferably arranged a leakage draining exhaust. This leakage draining exhaust is suitably connected to a collecting tank over an intermediate space.

Between the chamber and the leakage draining exhaust there is advantageously arranged a slot towards the percussive piston, said slot having narrow slot width and short axial length in order to give as good an effect as possible.

In a preferred aspect of the invention, the hydraulic rock drilling machine includes a processor and regulating means for achieving regulation of said hydraulic liquid supply as a response to pressure variations sensed by a pressure sensor. Preferably the pressure sensor senses pressure variations in said chamber or, at occurrence, in said auxiliary chamber.

The invention also concerns a method for the protection of a piston seal unit for sealing between a percussive piston and a cylinder in a housing of a rock drilling machine, wherein a piston guide is positioned between the piston seal unit and a working space in the cylinder. Hydraulic liquid is supplied from a hydraulic liquid supply to a surrounding ring-shaped inwardly open chamber provided between the piston guide and the piston seal unit for receiving a hydraulic liquid volume.

Corresponding features and advantages as indicated above in respect of the device are also valid in respect of the inventive method.

When the hydraulic liquid supply is regulated as a response to sensed pressure variations, typically said hydraulic liquid supply is increased as a response to registering of increased pressure variations.

### BRIEF DESCRIPTION OF DRAWINGS

The examples of the disclosure will now be described in greater detail by way of embodiments and with reference to the annexed drawings, wherein:
Fig. 1 shows an inventive rock drilling machine in an axial partial section,
Fig. 2 shows, in a larger scale, a part of the representation in Fig. 1, and
Fig. 3 diagrammatically illustrates an inventive method.

### DESCRIPTION OF EMBODIMENTS

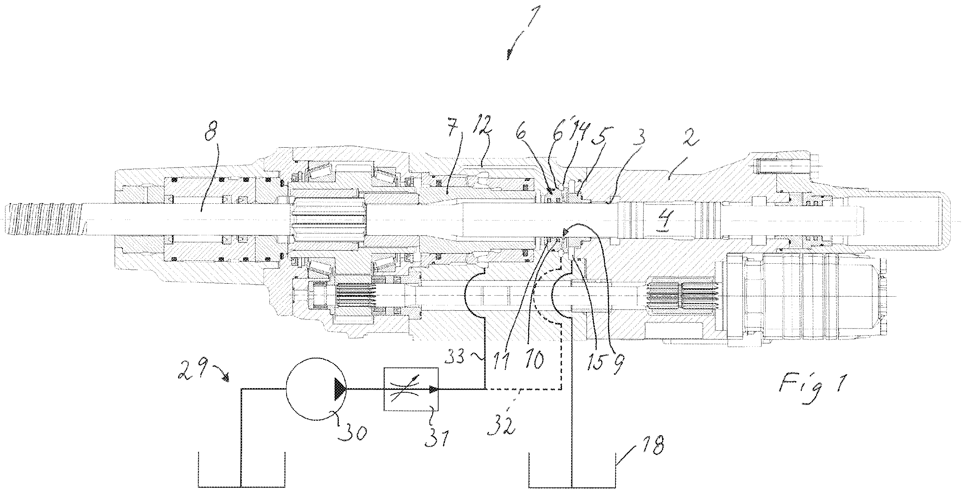

Fig. 1 shows in an axial section a hydraulic rock drilling machine 1, which in a housing 2 includes a percussive piston 4 which is moveable to and fro inside a cylinder 3. The percussive piston 4 is guided inside the housing 2 by a piston guide 5 in the form of a guiding sleeve. A piston seal unit 6 being arranged for preventing hydraulic liquid from extending into the lower part of the rock drilling machine is provided with two axially separated sealing devices in the form of piston seals 10 and 11.

In operation the percussive piston 4 performs percussive action against a shank adapter 8, which is received inside the rock drilling machine and against which in a per se known manner a damping piston 7 abuts for damping strike reflexes. The damping piston 7 has a damping flow circuit 29 for its supply.

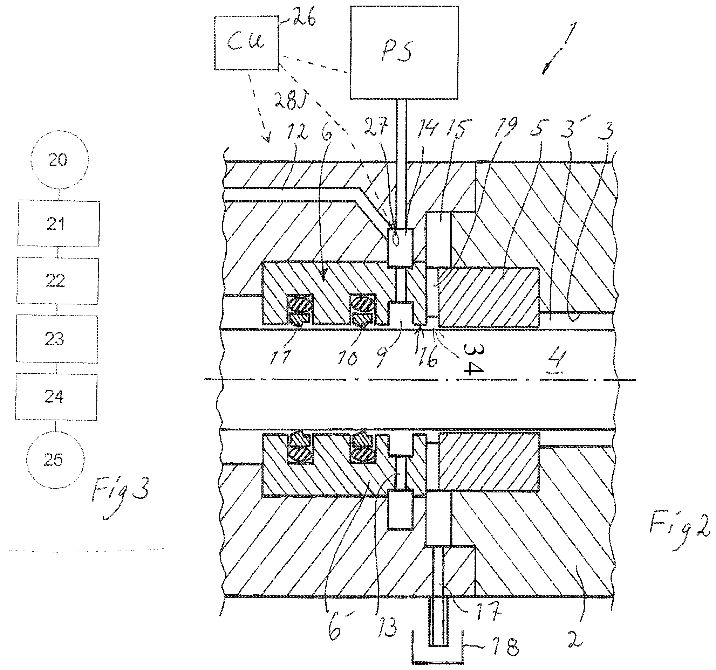

At the piston seal unit 6 is formed a ring-shaped chamber 9 which opens inwardly against the percussive piston 4 and which is situated between the piston seals 10, 11 and the piston guide 5. The ring-shaped chamber 9 is in the shown embodiment fed with an essentially continuous and suitably constant hydraulic fluid flow in the form of a return flow from the damping unit over a supply channel including a channel 12 and an auxiliary channel (-channels) 13 (see Fig. 2). This flow, through the channel 12, leads to the chamber 9 also over an auxiliary chamber 14 being situated at a short distance from the chamber 9. Through the auxiliary chamber 14 there is provided an extra hydraulic liquid volume close to the ring-shaped chamber 9 which is valuable in order to increase the effect of the device.

A variant for providing a hydraulic liquid flow to the chamber 9 is illustrated through the damping flow circuit, globally indicated with 29, which includes a hydraulic pump 30 and a controllable restriction 31. Hydraulic liquid supplied through the circuit 29 is delivered to the damping arrangement through the conduit 33 and is thereupon led according to the above from the damping arrangement over the channel 12 to the chamber 9. Alternatively a flow can come from the hydraulic pump 30 and the restriction 31 (or any other hydraulic liquid source) directly to the chamber 9 which is indicated with the interrupted line 32.

Fig. 2 shows the arrangement at the piston seals more in detail, wherein it is apparent that between the piston guide 5 and the piston seals 10, 11, a leakage draining exhaust is arranged, globally indicated with 34. This leakage draining exhaust 34 most inwardly against the piston is provided with an inwardly open continuously extending surrounding groove, which over radially extending channels 19 communicates with a collecting space 15 which in turn over a channel 17 leads away collected hydraulic liquid to a collecting tank 18.

In operation of the device according to the invention, because of the movements of the percussive piston, during certain operational situations, great pressure variations will occur in the space 3' between the percussive piston 4 and the wall of the cylinder 3. The space 3' is hereby a working space inside the cylinder.

In case the pressure variations are sufficiently great, they will in turn lead to the formation of cavitation bubbles which tend to follow leaking hydraulic liquid and leak out through a slit being formed between the piston guide 5 and the percussive piston 4. In case of great amounts of cavitation bubbles in the liquid, in conventional rock drilling machines there is a risk that at least some of the bubbles find their way all the way to the piston seals 10, 11 so as to, during the collapse of the cavitation bubbles, cause damages on these piston seals.

Some of the cavitation bubbles are led away over the leakage draining exhaust 34, but it has been observed, as is indicated above, that this arrangement is not entirely satisfactory to eliminate the risk of damages to the sealings. A problem with the conventional arrangement has also been shown to occur when in the drilling machine the collecting space 15 is connected to other drainage exhausts from other components in the rock drilling machine. It has thus been observed that unwanted pressure variations with resulting cavitation bubbles in these other components can be transferred over the leakage draining exhaust 34 to the region between the piston guide 5 and the piston seals 10, 11 and damage the latter.

This insight is in all the background to the establishment of the ring-shaped chamber 9 being inwardly open against the piston between the piston guide 5 and the piston seal unit. This chamber 9 is formed for receiving a hydraulic liquid volume and a hydraulic supply flow channel 12, 13 is arranged for hydraulic liquid supply to this chamber 9. PS indicates an alternative hydraulic liquid source.

Preferably this hydraulic supply flow channel starts from the return flow channel from the damping arrangement in the rock drilling machine, according to the above. Hydraulic liquid being supplied to the chamber 9 is thereupon led over the slot 16 through the leakage draining exhaust 34 to tank.

14 indicates an auxiliary chamber which is ring-shaped and positioned radially outside the chamber 9. The chamber 9 communicates with the auxiliary chamber 14 over a number of radially extending auxiliary channels 13. The provision of the extra auxiliary chamber 14 results in a preferred increase of the hydraulic liquid volume in the region between the piston seals and the piston guide which is advantageous for the reduction of the effect of the pressure pulsations and thereby the cavitation damage risk.

The piston seal unit 6 is in the shown embodiment formed by a double seal with the piston seals 10 and 11 supported by a device forming a seal holder 6', wherein also said ring-shaped chamber 9 is received.

The invention can be modified within the scope of the following claims. The piston seal unit 6 can thus include one or more piston seals. The width of the slot 16 between the chamber 9 and the leakage draining exhaust 34 is preferably held as small as possible and its axial extension as small as possible. It is preferred that the slot width is set to 0.5-1% of the piston diameter and the axial length of the slot to 1-10% of the piston diameter. The volume of the chamber 9 should preferably be as great as possible but it has been observed that a volume of 0.5-5.0 cm² gives very good effect in respect of a standard machine. The volume of the auxiliary chamber 14 should exceed and preferably be at least twice the volume of the chamber 9.

The hydraulic liquid supply flow is adjustable such that it can be adapted to the operation of the rock drilling machine and to the prevailing requirements. Hereby it should be observed that the flow is essentially continuous and/or constant and is not allowed to fluctuate over for example a percussive cycle of the rock drilling machine. On the other hand it is an advantage to be able to regulate a magnitude of the flow as a response to sensed pressure variations in the chamber 9 or in the auxiliary chamber 14. Sensing the pressure variations in these situations can be achieved by way of per se known pressure sensors having small dimensions. In Fig. 2 is as an example shown a pressure sensor 27 positioned in the auxiliary chamber 14. The flow is typically regulated such that a sensed increase of the pressure variations leads to an increase of the hydraulic liquid flow to the chamber 9.

In Fig. 3 a method according to the invention is diagrammatically illustrated, wherein:
Position 20 indicates the start of a method sequence.
Position 21 indicates supply of hydraulic liquid from a hydraulic liquid source such as a return conduit from a damping unit in the drilling machine to the chamber 9.
Position 22 indicates sensing pressure variations in the chamber 9 or in the auxiliary chamber 14.
Position 23 indicates evaluating the signals from the pressure sensor 27 which are passed on over signal cable 28 to a processor 26.
Position 24 indicates regulating the hydraulic liquid flow to the chamber 9 as a response to the result of the evaluation in the processor 26.
Position 25 indicates the end of the sequence.

It should be understood that the method sequence is repeated to the extent that is suitable and required for good operation of the machine.

## Claims

1. Hydraulic rock drilling machine (1) comprising a piston seal unit (6) for sealing between a percussive piston (4) and a cylinder (3) in a housing (2) of the rock drilling machine, wherein the hydraulic rock drilling machine further comprises a piston guide (5) positioned between the piston seal unit (6) and a working space in the cylinder (3), **characteri zed** in
- that said piston seal unit (6) comprises a seal holder (6') comprising one or more piston seals (10, 11) for sealing between the percussive piston (4) and the cylinder (3),
- that in the piston seal unit (6), between the piston guide (5) and the one or more piston seals (10, 11),there is arranged a surrounding ring-shaped inwardly open chamber (9), which is formed for receiving a hydraulic liquid volume, and
- that a hydraulic supply flow channel (12,13) for hydraulic liquid supply is connected to said surrounding ring-shaped chamber (9), the chamber being fed with a continuous and/or constant hydraulic fluid flow.

2. Hydraulic rock drilling machine according to claim 1, **ch aracterized** in that said hydraulic supply flow channel (12,13) is arranged to start from any one of the group: a return flow channel from a hydraulic percussive damping arrangement in the rock drilling machine, an adjustable constant flow source.

3. Hydraulic rock drilling machine according to any one of the previous claims,
**characterized in that** said chamber (9) connects to an auxiliary chamber (14) over at least one auxiliary channel (13).

4. Hydraulic rock drilling machine according to claim 3, **ch aracterized** in that said hydraulic supply flow channel (12,13) is arranged to connect to said chamber over the auxiliary chamber.

5. Hydraulic rock drilling machine according to anyone of the preceding claims, **characterized in that** between said chamber (9) and the piston guide (5) a leakage draining exhaust (34) is arranged.

6. Hydraulic rock drilling machine according to claim 5, **characterized in that** the leakage draining exhaust (34) over a collecting space (15) is connected to a collecting tank (18).

7. Hydraulic rock drilling machine according to claim 5 or 6, **characterized in that** between the chamber (9) and the leakage draining exhaust (34) a slot (16) is arranged against the percussive piston.

8. Hydraulic rock drilling machine according to any one of the preceding claims, **characterized in that** it includes a processor (26) for regulating said hydraulic liquid supply as a response to pressure variations sensed by a pressure sensor (27).

9. Method for the protection of a piston seal unit (6) for sealing between a percussive piston (4) and a cylinder (3) in a housing (2) of a rock drilling machine, wherein a piston guide (5) is positioned between the piston seal unit (6) and a working space in the cylinder (3), **characterized in that** said piston seal unit (6) comprises a seal holder (6') comprising one or more piston seals (10, 11) for sealing between the percussive piston (4) and the cylinder (3), that in the piston seal unit (6), between the piston guide (5) and the one or more piston seals (10, 11) of the piston seal unit (6) there is provided a surrounding ring-shaped inwardly open chamber (9) for receiving a hydraulic liquid volume, and that hydraulic liquid is supplied to said surrounding ring-shaped chamber from a hydraulic liquid supply, said flow being essentially continuous and/or constant.

10. Method according to claim 9, **characterized in that** said hydraulic supply flow is passed to said chamber (9) over an auxiliary chamber (14).

11. Method according to claim 9 or 10,
**characterized in that** said hydraulic supply flow is arranged to start from any one of the group: a return flow channel from a hydraulic percussive damping arrangement in the rock drilling machine, an adjustable constant flow source.

12. Method according to any one of the claims 9 - 11, **characterized in that** said hydraulic liquid supply is regulated as a response to pressure variations in said chamber (9) or at occurrences in said auxiliary chamber (14) .

13. Method according to claim 11, **characterized in that** said hydraulic liquid supply is increased as a response to increased pressure variations in said chamber or at occurrences in said auxiliary chamber.

## Patentansprüche

1. Hydraulische Gesteinsbohrmaschine (1) umfassend eine Kolbendichtungseinheit (6) zur Abdichtung zwischen einem Schlagkolben (4) und einem Zylinder (3) in einem Gehäuse (2) der Gesteinsbohrmaschine, wobei die hydraulische Gesteinsbohrmaschine ferner eine Kolbenführung (5) umfasst, die zwischen der Kolbendichtungseinheit (6) und einem Arbeitsraum in dem Zylinder (3) positioniert ist, **dadurch gekennzeichnet,**
- **dass** die Kolbendichtungseinheit (6) einen Dichtungshalter (6') umfasst, der eine oder mehrere Kolbendichtungen (10, 11) zur Abdichtung zwischen dem Schlagkolben (4) und dem Zylinder (3) umfasst,
- **dass** in der Kolbendichtungseinheit (6) zwischen der Kolbenführung (5) und der einen oder den mehreren Kolbendichtungen (10, 11) eine umlaufende ringförmige nach innen geöffnete Kammer (9) angeordnet ist, die zur Aufnahme eines Hydraulikflüssigkeitsvolumens ausgebildet ist, und
- **dass** ein Hydraulikzufuhrstromkanal (12, 13) zur Zufuhr von Hydraulikflüssigkeit mit der umlaufenden ringförmigen Kammer (9) verbunden ist, wobei die Kammer mit einem fortwährenden und/oder konstanten Hydraulikfluidstrom gespeist wird.

2. Hydraulische Gesteinsbohrmaschine nach Anspruch 1, **dadurch gekennzeichnet, dass** der Hydraulikzufuhrstromkanal (12, 13) dazu angeordnet ist, bei einem beliebigen der folgenden Gruppe zu beginnen: einem Rückstromkanal von einer hydraulischen Schlagdämpfungsanordnung in der Gesteinsbohrmaschine, einer einstellbaren Konstantstromquelle.

3. Hydraulische Gesteinsbohrmaschine nach einem der vorhergehenden Ansprüche, **dadurch gekennzeichnet, dass** die Kammer (9) über mindestens einen Nebenkanal (13) mit einer Nebenkammer (14) verbunden ist.

4. Hydraulische Gesteinsbohrmaschine nach Anspruch 3, **dadurch gekennzeichnet, dass** der Hydraulikzufuhrstromkanal (12, 13) dazu angeordnet ist, über die Nebenkammer mit der Kammer verbunden zu sein.

5. Hydraulische Gesteinsbohrmaschine nach einem der vorhergehenden Ansprüche, **dadurch gekennzeichnet, dass** zwischen der Kammer (9) und der Kolbenführung (5) ein Leckageableitungsauslass (34) angeordnet ist.

6. Hydraulische Gesteinsbohrmaschine nach Anspruch 5, **dadurch gekennzeichnet, dass** der Leckageableitungsauslass (34) über einen Sammelraum (15) mit einem Sammeltank (18) verbunden ist.

7. Hydraulische Gesteinsbohrmaschine nach Anspruch 5 oder 6, **dadurch gekennzeichnet, dass** zwischen der Kammer (9) und dem Leckageableitungsauslass (34) ein Schlitz (16) gegen den Schlagkolben angeordnet ist.

8. Hydraulische Gesteinsbohrmaschine nach einem der vorhergehenden Ansprüche, **dadurch gekennzeichnet, dass** sie einen Prozessor (26) zur Regelung der Hydraulikflüssigkeitszufuhr in Reaktion auf Druckänderungen, die von einem Drucksensor (27) erfasst werden, aufweist.

9. Verfahren zum Schutz einer Kolbendichtungseinheit (6) zur Abdichtung zwischen einem Schlagkolben (4) und einem Zylinder (3) in einem Gehäuse (2) einer Gesteinsbohrmaschine, wobei eine Kolbenführung (5) zwischen der Kolbendichtungseinheit (6) und einem Arbeitsraum in dem Zylinder (3) positioniert ist, **dadurch gekennzeichnet, dass** die Kolbendichtungseinheit (6) einen Dichtungshalter (6') umfasst, der eine oder mehrere Kolbendichtungen (10, 11) zur Abdichtung zwischen dem Schlagkolben (4) und dem Zylinder (3) umfasst, dass in der Kolbendichtungseinheit (6) zwischen der Kolbenführung (5) und der einen oder den mehreren Kolbendichtungen (10, 11) der Kolbendichtungseinheit (6) eine umlaufende ringförmige nach innen geöffnete Kammer (9) zur Aufnahme eines Hydraulikflüssigkeitsvolumens bereitgestellt ist, und dass Hydraulikflüssigkeit von einer Hydraulikflüssigkeitzufuhr der umlaufenden ringförmigen Kammer zugeführt wird, wobei der Strom im Wesentlichen fortwährend und/oder konstant ist.

10. Verfahren nach Anspruch 9, **dadurch gekennzeichnet, dass** der Hydraulikzufuhrstrom über eine Nebenkammer (14) zu der Kammer (9) geführt wird.

11. Verfahren nach Anspruch 9 oder 10, **dadurch gekennzeichnet, dass** der Hydraulikzufuhrstrom dafür eingerichtet ist, bei einem beliebigen der folgenden Gruppe zu beginnen: einem Rückstromkanal von einer hydraulischen Schlagdämpfungsanordnung in der Gesteinsbohrmaschine, einer einstellbaren Konstantstromquelle.

12. Verfahren nach einem der Ansprüche 9 bis 11, **dadurch gekennzeichnet, dass** die Hydraulikflüssigkeitszufuhr in Reaktion auf Druckänderungen in der Kammer (9) oder bei Auftreten in der Nebenkammer (14) geregelt wird.

13. Verfahren nach Anspruch 11, **dadurch gekennzeichnet, dass** die Hydraulikflüssigkeitszufuhr in Reaktion auf erhöhte Druckänderungen in der Kammer oder bei Auftreten in der Nebenkammer erhöht wird.

## Revendications

1. Perforatrice de roches hydraulique (1) comprenant une unité d'étanchéité de piston (6) destinée à assurer l'étanchéité entre un piston à percussion (4) et un cylindre (3) dans un boîtier (2) de la perforatrice de roches, la perforatrice de roches hydraulique comprenant en outre un guide de piston (5) positionné entre l'unité d'étanchéité de piston (6) et un espace de travail dans le cylindre (3), **caractérisée**
- **en ce que** ladite unité d'étanchéité de piston (6) comprend un élément de retenue de joint d'étanchéité (6') comprenant un ou plusieurs joints d'étanchéité de piston (10, 11) destinés à assurer l'étanchéité entre le piston à percussion (4) et le cylindre (3),
- **en ce que** dans l'unité d'étanchéité de piston (6), entre le guide de piston (5) et le ou les joints d'étanchéité de piston (10, 11), est agencée une chambre (9) ouverte vers l'intérieur de forme annulaire circonvoisine, laquelle est formée de manière à recevoir un volume de liquide hydraulique, et
- **en ce qu'**un conduit de flux d'alimentation hydraulique (12, 13) pour l'alimentation en liquide hydraulique est relié à ladite chambre (9) de forme annulaire circonvoisine, la chambre étant alimentée en un flux de fluide hydraulique continu et/ou constant.

2. Perforatrice de roches hydraulique selon la revendication 1, **caractérisée en ce que** ledit conduit de flux d'alimentation hydraulique (12, 13) est agencé de manière à commencer par l'un quelconque parmi le groupe : un conduit de flux de retour à partir d'un ensemble d'amortissement de percussion hydraulique dans la perforatrice de roches, une source de flux constant réglable.

3. Perforatrice de roches hydraulique selon l'une quelconque des revendications précédentes, **caractérisée en ce que** ladite chambre (9) est reliée à une chambre auxiliaire (14) par le biais d'au moins un conduit auxiliaire (13).

4. Perforatrice de roches hydraulique selon la revendication 3, **caractérisée en ce que** ledit conduit de flux d'alimentation hydraulique (12, 13) est agencé pour être relié à ladite chambre par le biais de la chambre auxiliaire.

5. Perforatrice de roches hydraulique selon l'une quelconque des revendications précédentes, **caractérisée en ce qu'**une sortie d'évacuation de fuite (34) est agencée entre ladite chambre (9) et le guide de piston (5) .

6. Perforatrice de roches hydraulique selon la revendication 5, **caractérisée en ce que** la sortie d'évacuation de fuite (34) est reliée à un réservoir collecteur (18) par le biais d'un espace collecteur (15).

7. Perforatrice de roches hydraulique selon la revendication 5 ou 6, **caractérisée en ce qu'**une fente (16) est agencée contre le piston à percussion entre la chambre (9) et la sortie d'évacuation de fuite (34).

8. Perforatrice de roches hydraulique selon l'une quelconque des revendications précédentes, **caractérisée en ce qu'**elle comporte un processeur (26) servant à réguler ladite alimentation en liquide hydraulique en réponse à des variations de pression détectées par un capteur de pression (27).

9. Procédé de protection d'une unité d'étanchéité de piston (6) destinée à assurer l'étanchéité entre un piston à percussion (4) et un cylindre (3) dans un boîtier (2) d'une perforatrice de roches, un guide de piston (5) étant positionné entre l'unité d'étanchéité de piston (6) et un espace de travail dans le cylindre (3), **caractérisé en ce que** ladite unité d'étanchéité de piston (6) comprend un élément de retenue de joint d'étanchéité (6') comprenant un ou plusieurs joints d'étanchéité de piston (10, 11) destinés à assurer l'étanchéité entre le piston à percussion (4) et le cylindre (3), **en ce que** dans l'unité d'étanchéité de piston (6), entre le guide de piston (5) et le ou les joints d'étanchéité de piston (10, 11) de l'unité d'étanchéité de piston (6), est agencée une chambre (9) ouverte vers l'intérieur de forme annulaire circonvoisine destinée à recevoir un volume de liquide hydraulique, et **en ce qu'**un liquide hydraulique est fourni à ladite chambre de forme annulaire circonvoisine à partir d'une alimentation en liquide hydraulique, ledit flux étant sensiblement continu et/ou constant.

10. Procédé selon la revendication 9, **caractérisé en ce que** ledit flux d'alimentation hydraulique est transmis à ladite chambre (9) par le biais d'une chambre auxiliaire (14) .

11. Procédé selon la revendication 9 ou 10, **caractérisé en ce que** ledit flux d'alimentation hydraulique est agencé de manière à commencer par l'un quelconque parmi le groupe : un conduit de flux de retour à partir d'un ensemble d'amortissement de percussion hydraulique dans la perforatrice de roches, une source de flux constant réglable.

12. Procédé selon l'une quelconque des revendications 9 à 11, **caractérisé en ce que** ladite alimentation en liquide hydraulique est régulée en réponse à des variations de pression dans ladite chambre (9) ou en présence de celles-ci dans ladite chambre auxiliaire (14) .

13. Procédé selon la revendication 11, **caractérisé en ce que** ladite alimentation en liquide hydraulique est augmentée en réponse à des variations de pression accrues dans ladite chambre ou en présence de celles-ci dans ladite chambre auxiliaire.
